# EUROPEAN PATENT SPECIFICATION

(11) **EP 2 689 064 B1**
(45) Date of publication and mention of the grant of the patent: **22.07.2015**
(21) Application number: 12760173.0
(22) Date of filing: 21.03.2012
(51) Int. Cl.: D21C 9/18, B30B 9/20, B01D 33/067, B21B 29/00, D21C 9/06, D21D 1/40, D21F 3/06, D21G 3/04

(54) **A DEVICE FOR ADJUSTING A PRESS NIP**
VORRICHTUNG ZUR EINSTELLUNG EINES PRESSSPALTS
DISPOSITIF POUR AJUSTER UNE LIGNE DE PRESSAGE

(30) Priority: 24.03.2011 SE 1150262
(43) Date of publication of application: 29.01.2014
(73) Proprietor: Valmet Aktiebolag, 851 94 Sundsvall (SE)
(72) Inventor: LUNDBERG, Jörgen, S-856 43 Sundsvall (SE); ÖDMARK, Leif, S-864 33 Matfors (SE)
(74) Representative: Groth & Co. KB
(86) International application number: PCT/SE2012/050310
(87) International publication number: WO 2012/128711

(56) References cited:
- EP-A1- 0 706 827
- EP-A2- 1 035 250
- WO-A1-2009/075643
- WO-A1-2009/075645
- WO-A1-2009/075645
- WO-A1-2010/036192
- WO-A1-2010/036194
- US-A- 3 730 079
- US-A- 4 817 407
- US-A- 4 817 407
- US-A- 5 022 318
- US-B1- 6 311 849

## Description

### Technical Field

The present invention relates to a device for adjusting a press nip defined by a first press roll and a second press roll, each press roll being rotatable about an axis of rotation and included in an apparatus for dewatering pulp, especially cellulose-containing pulp, and the apparatus has a first pair of bearing housings provided with bearings by means of which the first press roll is journalled, each bearing housing of the first pair and the first press roll being movable in relation to the second press roll in a direction substantially transverse to the axial direction of the press nip, and pressure means for forcing the bearing housings of the first pair in a direction towards the press nip, the first press roll being movable between a first radial end position and a second radial end position. Further, the present invention relates to an apparatus for dewatering pulp comprising a first press roll, a second press roll and a device of the above-mentioned sort.

### Background of the Invention

When producing cellulose-based products, a roll press is frequently used for washing and dewatering the cellulose-based pulp. The pulp is passed between two co-operating press rolls installed in the roll press, the press rolls having an outer surface, a so called mantle surface, which is permeable to liquid pressed out of the pulp, and the pulp is pressed in a roll nip, or a press nip, between the press rolls, whereby liquid is pressed out of the pulp. The roll press may also include one or more washing zones prior to the press nip.

One example of such a roll press is disclosed in EP 1 035 250, where the axes of rotation of the press rolls are lying in substantially the same horizontal plane. The pulp is fed in the direction of rotation of the press rolls through the press nip and the pulp passes the press nip between the press rolls from below upwards.

Some prior art roll presses are provided with a press roll which is laterally movable in relation to the other press roll to vary the press nip between the press rolls. The cross-section of the press nip, or the distance between the press rolls, is one of the operating parameters that affect the quality of the washed and dewatered pulp. US 3,730,079 discloses a roll press comprising two press rolls rotatable about parallel axes, wherein one of the press rolls is laterally movable relative to the other to vary the cross-section of the therebetween press nip. Pressing force is applied to the laterally movable press roll by a plurality of separate link systems actuated by individual fluid pressure operated actuators. Pneumatically expansible tubes or springs are provided to force the movable press roll away from the other. The object of this press is to maintain the axes of the press rolls parallel while permitting relative lateral movement of the press rolls.

However, many conventional roll presses have only one distinct press nip that cannot be altered or adjusted during operation. One of the press rolls may be laterally movable for safety reasons to avoid damages, e.g. if the pulp in the press nip applies an excessive force on the press rolls. When a pulp processing line shall process different kinds of pulp, e.g. pulp of different qualities and material sizes, or when there are large variations in production, there may be a need for the possibility of adjusting the size of the press nip during operation, to attain an optimal performance of the roll press, e.g. to attain the required dryness of the pulp pressed by the roll press. Having a roll press with one distinct press nip that cannot be adjusted during operation is a limitation in a processing line with large production variations, e.g. variations in the pulp material. In a roll press having only one distinct press nip size, the dryness of the pulp may be controlled during operation by adjusting the rotation speed of the press rolls for a certain torque of the press rolls. This mode of control requires a distinct and secure radial position of the laterally movable press roll to maintain a constant press nip size and thus to prevent any fluctuations in the quality and dryness of the pressed pulp.

### The Object of the Invention

The inventors of the present invention have identified the need for an additional distinct radial position of the laterally movable press roll in an apparatus for dewatering pulp, especially cellulose-containing pulp, comprising two rotatable press rolls, and thus providing an adjustment of the press nip during operation between two different distinct press nips, to attain an improved performance of the apparatus, e.g. to attain a required dryness of the pulp pressed by the apparatus.

The object of the present invention is to provide an improved processing of pulp in an apparatus for dewatering pulp comprising two rotatable press rolls.

It is another object of the present invention to provide pulp having the required dryness after being pressed by such an apparatus.

### Summary of the Invention

The above-mentioned objects are achieved by providing a device for adjusting a press nip defined by a first press roll and a second press roll, each press roll being rotatable about an axis of rotation and included in an apparatus for dewatering pulp, and the apparatus has a first pair of bearing housings provided with bearings by means of which the first press roll is journalled, each bearing housing of the first pair and the first press roll being movable in relation to the second press roll in a direction substantially transverse to the axial direction of the press nip, the device comprising pressure means for forcing the bearing housings of the first pair in a direction towards the press nip, the first press roll being movable between a first radial end position and a second radial end position, and the device is arranged to adjust the press nip during operation of the apparatus and the device comprises at least one adjusting cylinder for adjusting the first press roll to each of the radial end positions during operation of the apparatus, the adjusting cylinder being arranged to force at least one of the bearing housings of the first pair in a direction away from the press nip to move the first press roll to one of the radial end positions, and the adjusting cylinder has a length of stroke that defines the difference between two different press nips for the apparatus, wherein the length of stroke of the adjusting cylinder is adjustable to adjust the difference between the two different press nips.

The difference between the two different press nips is the difference in radial width, or cross-section, of the two press nips. The length of stroke may also be called the cylinder stroke or the piston stroke.

A stated above, the device according to the present invention is arranged to adjust the press nip during operation of the apparatus.

According to the present invention, the length of stroke of the adjusting cylinder is adjustable to adjust the difference between the two different press nips. By means of the device according to the present invention, the difference between the two different press nips can be efficiently adjusted, and the size of at least one of the two press nips may be easily adjusted and set in an efficient manner, without dismantling the apparatus. By means of the device according to the present invention, an adjustment of the press nip during operation between two different distinct press nips, in an apparatus, e.g. a roll press, for dewatering pulp, comprising two rotatable press rolls, is provided in an efficient way. The two distinct press nips are different in that the cross-sections or radial widths of the two press nips are different, i.e. the radial distances between the outer surfaces of the press rolls are different for the two press nips. By means of the present invention, a second distinct radial position of the laterally movable press roll may be set during operation to attain a required dryness of the pulp pressed by the apparatus. By means of the device according to the present invention the apparatus may efficiently process different kinds of pulp, e.g. pulp of different qualities and material sizes, the apparatus may efficiently dewater different kinds of pulp, e.g. pulp having different qualities and material sizes, and the apparatus can efficiently manage large variations in production. Hereby, an improved processing of pulp in an apparatus for dewatering pulp is achieved, and pulp having the required dryness after being pressed is obtained. By means of the present invention, standstills in the processing of different kinds of pulp are avoided. By means of the present invention, a prior art roll press having only one distinct press nip during operation can be easily upgraded to a roll press where the press nip can be adjusted during operation between two different distinct press nips.

The two different press nips are different in that the radial sizes of the two press nips are different, i.e. the press nips have different radial extensions or different cross-sections.

The movement of the bearing housings of the first pair may be guiding by guiding means which may be structured in various ways known to the skilled person.

The pressure means may be arranged to force the bearing housings of the first pair in a direction radially, or laterally, towards the second press roll, and the adjusting cylinder may be arranged to force at least one of the bearing housings of the first pair in a direction radially, or laterally, away from the second press roll to move the first press roll to one of the radial end positions.

The adjusting cylinder may be arranged to push at least one of the bearing housings of the first pair in a direction away from the press nip to move the first press roll to one of the radial end positions. The adjusting cylinder may be an adjusting pressure cylinder.

The pressure means may be arranged to push the bearing housings of the first pair in a direction towards the press nip.

The adjusting cylinder may have a piston, and the adjusting cylinder may have a length of stroke of the piston, where the length of stroke of the piston defines the difference between two different press nips.

According to an advantageous embodiment of the device according to the present invention, the adjusting cylinder may be in the form of a hydraulic adjusting cylinder. The hydraulic adjusting cylinder may use an oil based hydraulic medium or any other liquid as hydraulic medium. By means of this embodiment, the adjustment of the press nip during operation between two different press nips is further improved. Generally, a hydraulic system is already on site, to which the adjusting cylinder may be connected. A hydraulic cylinder is also a self-lubricating unit and sensitive parts of the cylinder are enclosed by the cylinder housing, making the hydraulic cylinder suitable for the operating conditions. Alternatively, the adjusting cylinder may be in the form of a pneumatic adjusting cylinder.

According to a further advantageous embodiment of the device according to the present invention, the adjusting cylinder is arranged to at least partially counteract the force produced by the pressure means and applied to at least one of the bearing housings of the first pair. By means of this embodiment, the adjustment of the press nip during operation between two different press nips is further improved.

According to another advantageous embodiment of the device according to the present invention, the adjusting cylinder comprises a cylinder housing, the cylinder housing defining an axis and being provided with a cylinder head, and a piston housed in the cylinder housing and axially movable in relation to the cylinder housing. The adjusting cylinder may comprise further cylinder specific features known to the skilled person.

According to yet another advantageous embodiment of the device according to the present invention, the pressure means comprise at least one pressure cylinder. The pressure cylinder may be in the form of a hydraulic pressure cylinder. Alternatively, the pressure cylinder may be in the form of a pneumatic pressure cylinder. Alternatively, the pressure means may be electrically controlled, e.g., the pressure means may comprise an electrically controlled loading jack or lever.

According to still another advantageous embodiment of the device according to the present invention, the adjusting cylinder is arranged to be connected to a pressure source to which the at least one pressure cylinder is connected, the adjusting cylinder has a piston area which is greater than the piston area of the pressure cylinder, a first press nip of the two press nips being smaller, in a radial direction, than a second press nip of the two press nips, the adjusting cylinder is arranged to set the second press nip when the adjusting cylinder and the pressure cylinder are exposed to the same pressure from the pressure source, and the adjusting cylinder is arranged to set the first press nip when the adjusting cylinder is disconnected from the pressure source. The first press nip is radially smaller than the second press nip, i.e. the first press nip has a smaller extension in a radial direction compared to the second press nip. By means of this embodiment, the same pressure source, without any sophisticated intermediate equipment, may be used to control the adjusting cylinder and the pressure cylinder in order to move the bearing housing to a different position and to a different press nip, whereby the adjustment of the press nip between the two different distinct press nips is further improved.

According to an advantageous embodiment of the device according to the present invention, the adjusting cylinder comprises a threaded coupling and a stroke adjusting element, and the axial position of the stroke adjusting element is adjustable by means of the threaded coupling to adjust the length of stroke of the adjusting cylinder and thus to adjust the difference between the two different press nips. By introducing the innovative threaded coupling and stroke adjusting element, the size of at least one of the two press nips may be easily adjusted and set in an efficient manner, without dismantling the apparatus. By means of this embodiment, the apparatus may efficiently process different kinds of pulp, e.g. pulp of different qualities and material sizes, the apparatus may efficiently dewater different kinds of pulp, and the apparatus can efficiently manage large variations in production. Hereby, an improved processing and dewatering of pulp in an apparatus for dewatering pulp is achieved, and pulp having the required dryness after being pressed is obtained. By means of this embodiment, the difference between the two different press nips can be adjusted without dismantling the adjusting cylinder.

According to a further advantageous embodiment of the device according to the present invention, the stroke adjusting element comprises a spacer, at least a portion of the spacer being positioned between the piston and the cylinder head to adjust the length of stroke by means of the spacer, and the spacer is movable by means of the threaded coupling for adjusting the axial position of the spacer to adjust the length of stroke. By means of this embodiment, the adjustment and setting of the size of at least one of the two press nips is further improved and facilitated.

Alternatively, the stroke adjusting element may comprise the cylinder head, where the cylinder head is connected to the cylinder housing by means of the threaded coupling, and the cylinder head may be axially movable in relation to the remaining part of the cylinder housing by means of the threaded coupling for adjusting the axial position of the cylinder head in relation to the cylinder housing to adjust the length of stroke.

According to another advantageous embodiment of the device according to the present invention, the spacer is connected to the cylinder housing by means of the threaded coupling, and the spacer is movable in relation to the cylinder housing by means of the threaded coupling. By means of this embodiment, the adjustment and setting of the size of at least one of the two press nips is further improved and facilitated.

According to still another advantageous embodiment of the device according to the present invention, the adjusting cylinder comprises spacer locking means for locking the spacer to the cylinder housing to lock the axial position of the spacer in relation to the cylinder housing. By means of this embodiment, any dislocation of the set spacer is avoided, and thus, the setting of the size of at least one of the two press nips may be further improved.

According to yet another advantageous embodiment of the device according to the present invention, the spacer locking means comprise a through-hole provided in the cylinder housing and an at least partially threaded locking element adapted to engage the through-hole and the spacer. By means of this embodiment, the setting of the size of at least one of the two press nips is further improved. The locking element may be a screw. However, other spacer locking means are possible.

According to an advantageous embodiment of the device according to the present invention, the adjusting cylinder comprises an axially extending piston rod connected to the piston, and at least a portion of the spacer is positioned between the piston rod and the cylinder housing. By means of this embodiment, the adjustment and setting of the size of at least one of the two press nips is further improved and facilitated, since the spacer may be easily reached outside of the cylinder housing by an operator. By means of this embodiment, the difference between the two different press nips can be adjusted without dismantling the adjusting cylinder.

Alternatively, the spacer may be connected to the piston by means of the threaded coupling, and the spacer may be movable in relation to the piston by means of the threaded coupling. The device may comprise spacer locking means for locking the spacer to the piston to lock the axial position of the spacer in relation to the piston.

According to a further advantageous embodiment of the device according to the present invention, the cylinder housing is arranged to hold at least one removable spacer between the piston and the cylinder head to adjust the length of stroke of the adjusting cylinder by means of the spacer, and the device is arranged to adjust the difference between the two different press nips by means of the spacer. By means of this embodiment, the size of at least one of the two press nips may be easily adjusted and set in an efficient manner. By means of this embodiment, the apparatus may efficiently process, e.g. dewater, different kinds of pulp, e.g. pulp of different qualities and material sizes, and the apparatus can efficiently manage large variations in production. Hereby, an improved processing of pulp in an apparatus for dewatering pulp is achieved, and pulp having the required dryness after being pressed is obtained.

The at least one removable spacer may be attached to the cylinder housing, e.g. to the cylinder head, or to the piston.

According to another advantageous embodiment of the device according to the present invention, the adjusting cylinder comprises a piston member connected to the piston by means of a second threaded coupling, a first press nip of the two press nips being smaller than a second press nip of the two press nips, and the piston member is axially movable in relation to the piston by means of the second threaded coupling to adjust the axial position of the piston member in relation to the piston for adjusting the first press nip. The outer portion of the piston member may be convex. By means of this embodiment, the size of the first press nip may be easily adjusted and set in an efficient manner. By means of this embodiment, the apparatus may efficiently process, e.g. dewater, different kinds of pulp, e.g. pulp of different qualities and material sizes, and the apparatus can efficiently manage large variations in production. Hereby, an improved processing of pulp in an apparatus for dewatering pulp is achieved, and pulp having the required dryness after being pressed is obtained. The piston member may by an outer piston member in relation to the piston. The piston member may by an outer piston member in relation to the adjusting cylinder.

According to still another advantageous embodiment of the device according to the present invention, the adjusting cylinder comprises locking means for locking the piston member to the piston to lock the axial position of the piston member in relation to the piston. By means of this embodiment, any dislocation, e.g. axial dislocation, of the piston member is avoided, and thus, the setting of the size of the first press nip may be further improved.

According to yet another advantageous embodiment of the device according to the present invention, the locking means comprise a through-hole provided in the piston member, a threaded recess provided in the piston, and an at least partially threaded locking element adapted to engage the through-hole and the threaded recess. By means of this embodiment, the setting of the size of the first press nip is further improved. The locking element may be a screw. However, other locking means are possible.

According to an advantageous embodiment of the device according to the present invention, the piston or/and the piston member is/are arranged to hold a removable second spacer between the piston and the piston member to adjust and/or fix the first press nip. By means of this embodiment, any axial dislocation of the piston member is avoided, and the adjustment and setting of the size of the first press nip are further improved.

Further, the above-mentioned objects are achieved by providing an apparatus for dewatering cellulose-containing pulp, comprising a first press roll and a second press roll, each press roll being rotatable about an axis of rotation and having a permeable outer surface, the press rolls defining a press nip between them, and the apparatus is arranged to feed the pulp in the direction of rotation of the press rolls through the press nip, in which press nip the pulp is pressed, the apparatus comprises a first pair of bearing housings provided with bearings by means of which the first press roll is journalled, each bearing housing of the first pair and the first press roll being movable in relation to the second press roll in a direction substantially transverse to the axial direction of the press nip, and pressure means for forcing the bearing housings of the first pair in a direction towards the press nip, wherein the apparatus comprises a device for adjusting the press nip as defined in any of the claims 1 to 13, or a device for adjusting the press nip according to any of the above-mentioned embodiments of the device according to the present invention.

By means of the apparatus according to the present invention, an adjustment of the press nip during operation between two different distinct press nips is provided in an efficient way. Thus, the apparatus, e.g. in the form of a roll press, can efficiently process, e.g. dewater, different kinds of pulp, e.g. pulp of different qualities and material sizes, and the apparatus can efficiently manage large variations in production. Hereby, an improved processing of pulp is achieved, and pulp having the required dryness after being pressed is obtained. Otherwise, an improved apparatus for dewatering pulp is provided for reasons stated above in connection with the disclosure of the various embodiments of the device according to the present invention.

According to an advantageous embodiment of the apparatus according to the present invention, the apparatus comprises a stationary frame, each bearing housing of the first pair being movable in relation to the frame, the pressure means being in physical contact with the frame and each bearing housing of the first pair, and the at least one adjusting cylinder is in physical contact with the frame and at least one of the bearing housings of the first pair. By this embodiment, the adjustment of the press nip during operation between the two different press nips is further improved.

The apparatus may comprise a vat which at least partially houses the two press rolls. The axes of rotation of the two press rolls may be in the same plane which is substantially parallel to the plane on which the apparatus rests, or the axes of rotation of the press rolls can be positioned in other ways.

The above-mentioned features and embodiments of the device and the apparatus, respectively, may be combined in various possible ways providing further advantageous embodiments.

Further advantageous embodiments of the device and apparatus, respectively, according to the present invention and further advantages of the device and the apparatus according to the present invention emerge from the detailed description of preferred embodiments.

### Brief Description of the Drawings

The present invention will now be described, for exemplary purposes, in more detail by way of embodiments and with reference to the enclosed drawings, in which:
- Fig. 1: is a schematic sectional view of an embodiment of an apparatus which may be provided with the device according to present invention;
- Fig. 2: is a schematic sectional side view illustrating a bearing housing of the apparatus of Fig. 1 provided with a first embodiment of the device according to the present invention;
- Fig. 3: is an enlarged schematic sectional view of an adjusting cylinder included in the first embodiment of the device of Fig. 2;
- Fig. 4: is a schematic perspective view of an adjusting cylinder included in second embodiment of the device according to present invention;
- Figs. 5-6: are sectional views of the adjusting cylinder of Fig. 4;
- Fig. 7: is a schematic top view of the cylinder housing of the adjusting cylinder of Fig. 4;
- Fig. 8: is a is a schematic side view of the cylinder housing of the adjusting cylinder of Fig. 4;
- Fig. 9: shows the section A-A of Fig. 7;
- Figs. 10-11: are schematic sectional side views illustrating the piston of the adjusting cylinder of Fig. 4 in two axial end positions; and
- Fig. 12: is a schematic exploded view of the adjusting cylinder of Fig. 4.

### Detailed Description of Preferred Embodiments

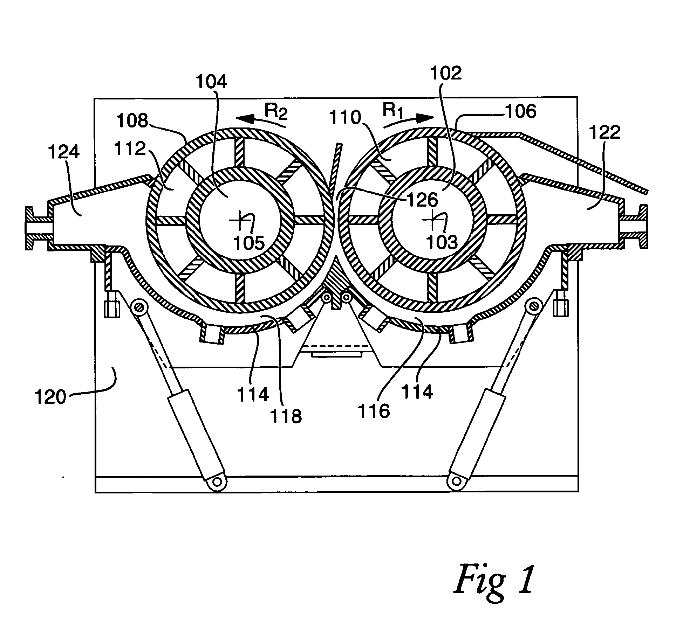

Fig. 1 schematically shows an embodiment of an apparatus for processing cellulose-containing pulp by washing, dewatering and pressing the pulp, in which the device according to the present invention may be installed. The apparatus shown may be called a roll press. The apparatus comprises a first drum 102, in the form of a first press roll 102, and a second drum 104, in the form of a second press roll 104, each being rotatable about an axis of rotation 103, 105 in a direction of rotation R₁, R₂, and having a permeable outer surface 106, 108 which may be formed by at least one perforated plate, i.e. provided with apertures, whereby the outer surface 106, 108 is permeable to filtrate pressed out of the pulp. Each press roll 102, 104 may be provided with a plurality of filtrate channels 110, 112 which extend along the axial extension of each press roll 102, 104 and are provided inwardly of the outer surface 106, 108 to lead evacuated filtrate away. Each filtrate channel 110, 112 may be provided with at least one outlet for discharging liquid therefrom, in ways known to the skilled person. The two press rolls 102, 104 may be at least partially housed in a vat 114. The vat 114 may partly enclose the outer surface 106, 108 of each press roll 102, 104, whereby a gap 116, 118 for each press roll 102, 104 is defined, limited by the vat 114 and the outer surface 106, 108 of the respective press roll 102, 104. The vat 114 may be pressurized. The apparatus may comprise a stationary frame 120 to which the vat 114 is mounted. The two press rolls 102, 104 are arranged to rotate in opposite directions. In Fig. 1, the first press roll 102 is arranged to rotate in a clockwise direction R₁, and the second press roll 104 is arranged to rotate in a counter clockwise direction R₂. The apparatus may be arranged to receive pulp on the outer surface of each press roll 102, 104 from two pulp distribution devices 122, 124 adapted to deposit the pulp on the outer surface 106, 108, and the pulp is fed in the direction of rotation of the press rolls 102, 104 through a press nip/roll nip 126 defined by and between the press rolls 102, 104, in which press nip 126 the pulp is pressed. At least in the region of the press nip 126, liquid is removed from the pulp and transported from the pulp to the filtrate channels 110, 112 through the outer surface 106, 108. At least the first press roll 102 is movable in relation to the second press roll 104, as disclosed in more detail below. The axes of rotation 103, 105 of the press rolls 102, 104 may be in substantially the same horizontal plane, and the apparatus may be arranged to feed the pulp through the press nip 126 in a substantially vertical direction from below upwards. Along the pulp's path between each pulp distribution device 122, 124 and the press nip 126, one or a plurality of wash zones can be provided in ways known to the person skilled in the art.

Instead of the pulp distribution devices 122, 124, the vat may instead be provided with a pulp inlet, e.g. located in a lower region of the vat, for providing the apparatus with pulp, e.g. from below. A vat having a lower pulp inlet could have a different design compared to the vat 114 shown in Fig. 1, e.g. without the defined gaps 116, 118.

The apparatus may also include a pulp transport screw (not shown), which for example can be in the form of a pulp disintegrating screw or a shredder screw, towards which the pulp which has been pressed in the press nip 126 is conveyed. The pulp transport screw may extend parallelly to the longitudinal axes of the press rolls 102, 104, and may be arranged to disintegrate the pulp and transport the pulp axially away from the press for further processing.

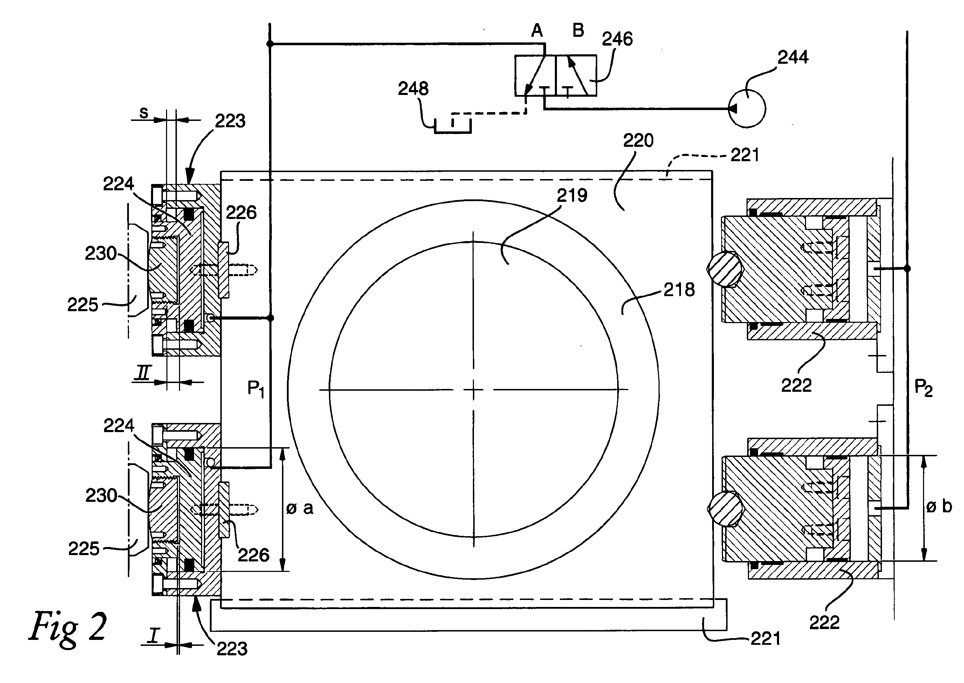

With reference to Fig. 2, a bearing housing 220 of a first pair of bearing housings 220 of the apparatus of Fig. 1 is schematically illustrated. The bearing housings 220 of the first pair may be provided with bearings 218, in which bearings 218 the ends 219 of the first press roll 102 are journalled. The apparatus may comprise a second pair of bearing housings (not shown) provided with bearings, in which bearings the ends of the second press roll 104 are journalled. In Fig. 2, only one of the bearing housings 220 of the first pair is shown. Each bearing housing 220 of the first pair and the first press roll 102 are movable in relation to the second press roll 104, in a direction substantially transverse to the axial direction of the press nip 126.

In Fig. 2, each bearing housing 220 of the first pair and the first press roll 104 are movable in a substantially straight horizontal direction. However, in other apparatuses, where the axes of rotation of the press rolls are still in the same horizontal plane, each bearing housing of the first pair and the first press roll could be movable in a substantially straight vertical direction to alter the press nip. In some apparatuses, the axes of rotation of the press rolls may be in the same vertical plane, and each bearing housing of the first pair and the first press roll may be movable in a substantially straight vertical or horizontal direction to alter the press nip. Alternatively, each bearing housing of the first pair and the first press roll may be movable in a curved direction substantially transverse to the axial direction of the press nip to alter the press nip. Further, the axes of rotation of the press rolls may be positioned in relation to one another in other ways than being in the same horizontal or vertical plane.

Each bearing housing 220 of the first pair may be guided by a guide 221, which may comprise a friction rail, e.g. made of a plastic material, which may be mounted to the frame 120. However, other guides are possible. Pressure means for forcing the bearing housings 220 of the first pair in a direction radially towards the press nip 126, i.e. to the left in Fig. 2, are provided. The pressure means 222 may comprise one or a plurality of pressure cylinders 222. Each bearing housing 220 may be provided with at least one pressure cylinder 222, and in Fig. 2, the bearing housing 220 is provided with two pressure cylinders 222. In this embodiment, each pressure cylinder 222 is a hydraulic pressure cylinder 222.

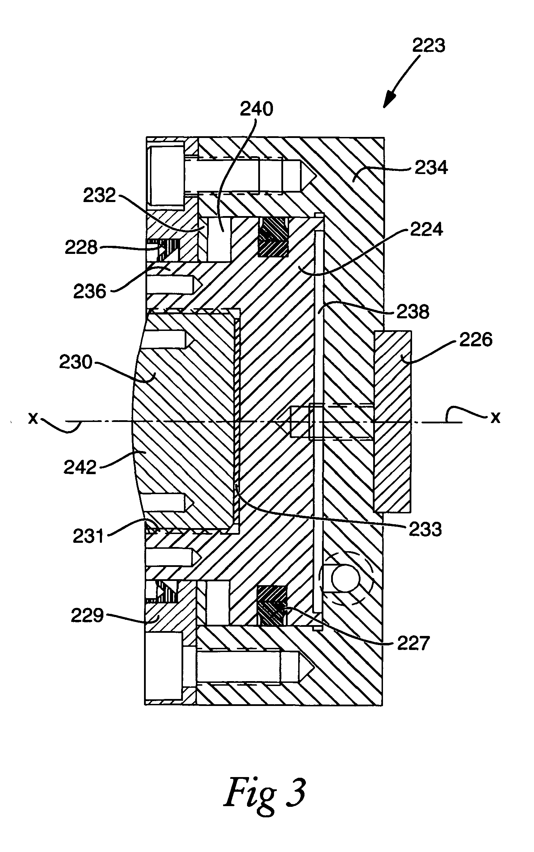

With reference to Figs. 2 and 3, a first embodiment of the device according to the present invention is schematically shown. The first press roll is movable between a first radial end position and a second radial end position. The device comprises at least one adjusting cylinder 223 for adjusting the first press roll 102 to each of the radial end positions, or for adjusting the radial end positions of the first press roll 102. In this embodiment, the device comprises two adjusting cylinders 223. The adjusting cylinders 223 are arranged to force the bearing housing 220 in a direction radially away from the press nip 126 to move the first press roll 102 to one of the radial end positions. In this embodiment, each adjusting cylinder 223 is a hydraulic adjusting cylinder 223. The adjusting cylinders 223 may be arranged to at least partially counteract the force produced by the pressure cylinders 222 and applied to the bearing housing 220. Each bearing housing 220 of the first pair is movable in relation to the stationary frame 120, and each pressure cylinder 222 may be in physical contact with the frame 120 and with the respective bearing housing 220 of the first pair, and each adjusting cylinder 223 may be in physical contact with the frame 120 and with the respective bearing housing 220 of the first pair. Advantageously, also the second bearing housing (not shown) of the first pair is provided with corresponding adjusting cylinders 223 and pressure cylinders 222.

The adjusting cylinder 223 may comprise a cylinder housing 234, the cylinder housing 234 defining an axis x-x and being provided with a cylinder head 229, and a piston 224 housed in the cylinder housing 234 and axially movable in relation to the cylinder housing 234. The adjusting cylinder 223 may comprises an axially extending piston rod 236 connected to the piston 224. The piston 224 may bear against the stationary frame 120, e.g. against a stationary part or portion 225 of the frame 120. The adjusting cylinder 223 may be arranged to be mounted to the bearing housing 220 by means of attachment 226. Alternatively, the adjusting cylinder 223 may be arranged to be mounted to the frame 120 by means of attachment, and the piston 224 may be adapted to bear against the bearing housing 220. The piston 224 separates the cylinder housing 234 into a primary chamber 238 and a secondary chamber 240. The adjusting cylinder 223 may comprise a sealing 227 between the piston 224 and the cylinder housing 234. The sealing 227 may surround the piston 224 about the axis x-x of the piston 224 and may be held by the piston 224. The sealing 227 may be made of a polymeric material, or any other suitable material. A scraper 228 may be held by the cylinder housing 234 and may be provided around the piston 224 about the axis x-x of the piston 224. The adjusting cylinder 223 may have a piston member 230 connected to the piston by means of a threaded coupling 231. The piston member 230 may be axially movable in relation to the piston 224 by means of the threaded coupling 231 to adjust the axial position of the piston member 230 in relation to the piston 224. The piston member 230 may bear against the stationary frame 120, e.g. against stationary parts 225 of the frame. The outer portion 242 of the piston member 230 may be convex, which may provide an advantageous contact between the stationary frame 120 and the piston member 230. The piston member 230 may be an outer member in relation to the adjusting cylinder 223.

The adjusting cylinder 223 has a length of stroke S that defines the difference between two different press nips *I, II* for the apparatus. The length of stroke S, also called the cylinder stroke or the piston stroke for a hydraulic cylinder, is the axial distance the piston 224 can travel within the cylinder housing 234. The cylinder housing 134 is arranged to hold at least one removable first spacer 232 between the piston 224 and the cylinder head 229 to adjust the length of stroke S of the adjusting cylinder 223 by means of the first spacer 232. The device is arranged to adjust the difference between the two different press nips *I*, *II* by means of the first spacer 232. The first spacer 232 may be ring-shaped and positioned radially around the piston 224. The first spacer 232 may be attached to an inside wall of the housing, e.g. the inside wall of the cylinder head 229. A first press nip *I* of the two press nips *I*, *II* is radially smaller than a second press nip *II* of the two press nips *I*, *II*, i.e. the radial extension of the first press nip *I* is smaller than the radial extension of the second press nip *II*. The piston member 230 may be axially movable in relation to the piston 224 by means of the threaded coupling 231 to adjust the first press nip *I*. The piston 224 or/and the piston member 230 may be arranged to hold a removable second spacer 233 between the piston 224 and the piston member 230 to facilitate the adjustment of the first press nip *I* and fix the first press nip *I*. Thus, the axial thickness of the second spacer 233 may determine the first press nip *I* (see Fig. 2). The second spacer may be differently sized in the radial direction compared to the second spaced shown in Fig. 3. The length of stroke S of the piston 224 is limited by the first spacer 232. The second press nip *II* is obtained as the sum of the first press nip *I* and the length of stroke S. The adjusting cylinder 223 may be arranged to be connected to a pressure source 244, e.g. a hydraulic source, which may comprise a hydraulic pump device, to which the pressure cylinders 222 are connected. The adjusting cylinder 223 may be connected to the pressure source 244 via a two-position valve 246. The adjusting cylinder 223 may have a piston area a which is greater than the piston area b of the pressure cylinder 222.

The adjusting cylinder 223 may be arranged to set the second press nip *II* when the adjusting cylinder and the pressure cylinder are exposed to the same pressure from the pressure source 244. The adjusting cylinder 223 may be arranged to set the first press nip *I* when the adjusting cylinder 223 is disconnected from the pressure source 244 by means of the two-position valve 246. When the adjusting cylinder 223 is disconnected from the pressure source 244, the force of the pressure cylinders 222 pushes the piston 224 to an axial end position towards the bottom inside wall 247 of the cylinder housing 234. Since the piston area a of the adjusting cylinder 223 is greater than the piston area b of the pressure cylinder 222, the same pressure may be supplied to the adjusting cylinder 223 and the pressure cylinder 222 to move the bearing housing 220 to a different position and to a different press nip. When the two-position valve 246 is positioned in position A, i.e. disconnected from the pressure source 244 and connected to an outlet 248, pressure P₁ is substantially equal to zero, or substantially equal to atmospheric pressure, and the first press nip *I* is set. When the two-position valve 246 is positioned in position *B*, i.e. connected to the pressure source 244, pressure P₁ is equal to pressure P₂ and the piston 224 is moved in relation to the cylinder housing 234 to the left in Fig. 2 and the second press nip *II* is set. Advantageously, the same hydraulic system may be used for both the control of the adjusting cylinders and press cylinders and the control of the hydraulic motors of the apparatus, and then the outlet 248 may be connected to the hydraulic motors.

Alternatively, the piston area of the adjusting cylinder 223 could be equal to the piston area of the pressure cylinder 222, and the adjusting cylinder 223 could be supplied with a greater pressure than the pressure supplied to the pressure cylinder 222 in order to move the bearing housing 220 to a different position and to a different press nip.

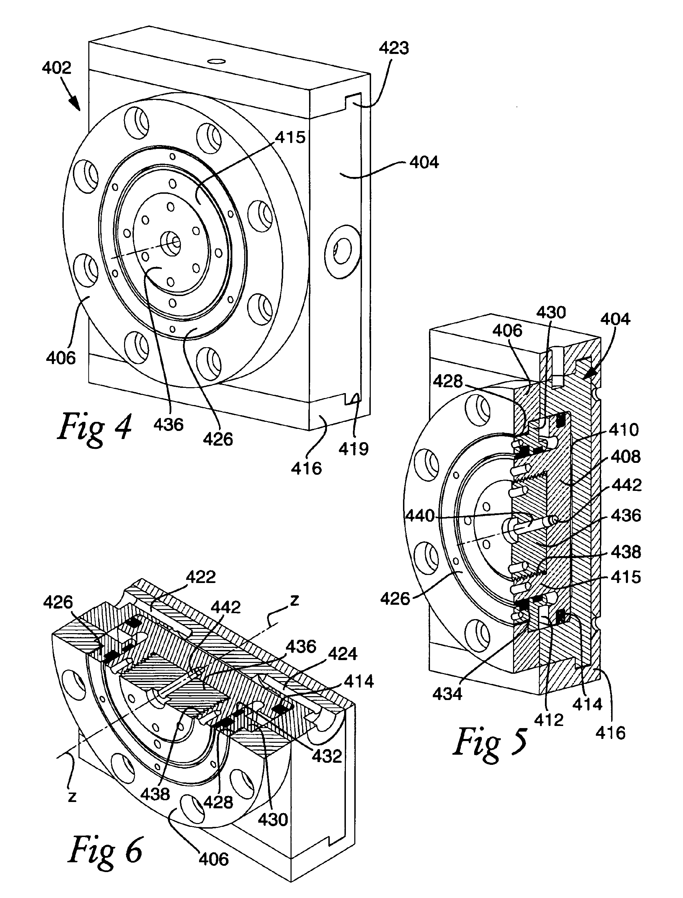

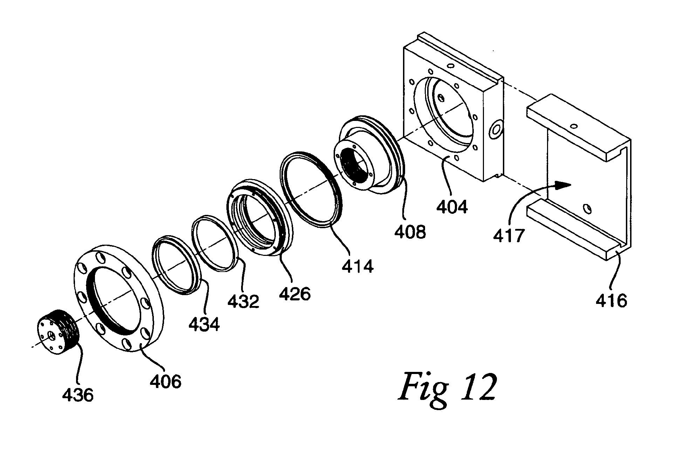

With reference to Figs. 4-12, a second embodiment of the device according to the present invention is schematically shown by schematically illustrating a second embodiment of the adjusting cylinder 402 included in the second embodiment of the device. Two adjusting cylinders 402 of the kind shown in Figs. 4-12 may e.g. replace the adjusting cylinders 223 of the device shown in Fig. 2.

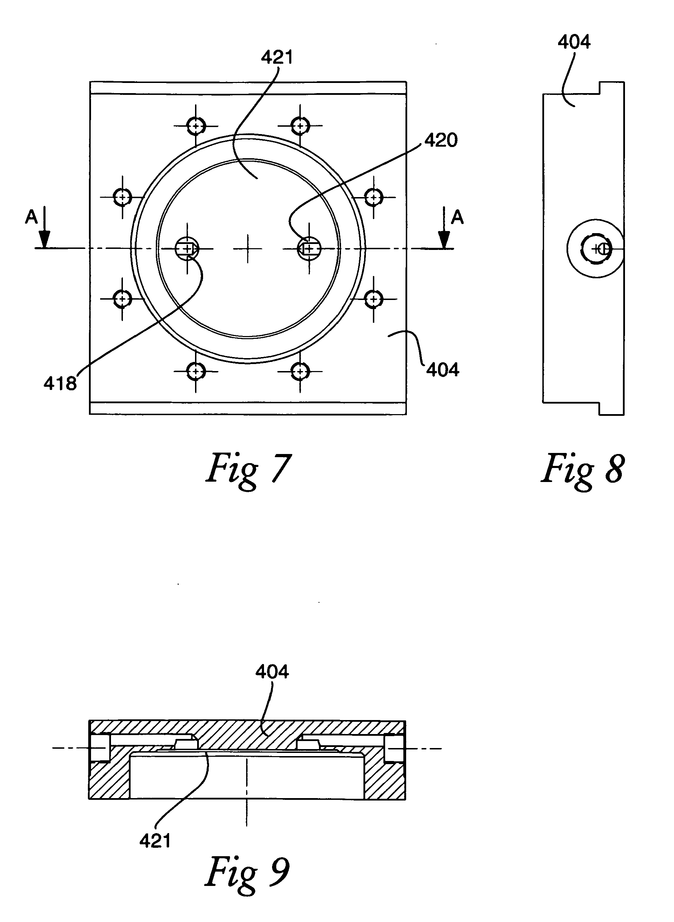

The adjusting cylinder 402, which may be a hydraulic cylinder, comprises a cylinder housing 404 which defines an axis z-z. The cylinder housing 404 comprises a cylinder head 406 which may be attached to the remaining part of the cylinder housing in various ways, e.g. by screws. The cylinder housing 404 houses a piston 408 which is axially movable in relation to the cylinder housing 404. The piston 408 is arranged to separate the interior of the cylinder housing 404 into a primary chamber 410 and a secondary chamber 412. The piston 408 may hold an annular sealing 414, e.g. made of a polymeric material, or any other suitable material, for separating the primary and secondary chambers 410, 412 in a sealing manner. The adjusting cylinder 402 may comprise an axially extending piston rod 415 connected to the piston 408. The piston rod may be integrally formed with the piston 408, or attached to the piston in other ways. The device may comprise means of attachment 416 for attaching the adjusting cylinder 402 to the frame 120 or to the bearing housing 220. The means of attachment 416 may comprise a compartment 417 which is arranged to hold the cylinder housing 404, e.g. by means of grooves 419 and projections 423 engaging one another and provided on the means of attachment and the cylinder housing, respectively. With reference to Figs. 7-11, the primary chamber 410 is provided with means for outlet and inlet of hydraulic medium. In this embodiment, the means for outlet and inlet of hydraulic medium comprise two ports 418, 420 located at a bottom inside wall 421 of the cylinder housing 404 for both outlet and inlet of hydraulic medium. However, other means for outlet and inlet of hydraulic medium are possible. For each port 418, 420, the cylinder housing 404 may comprise a channel 422, 424 connected to the respective port 418, 420, for guiding hydraulic medium to and from the primary chamber 410. These two channels 422, 424 may be adapted to be connected to a hydraulic system. Evacuation of any hydraulic medium from the secondary chamber 412, which may have passed the sealing 414 and reached the second chamber 412, may be performed by means of an outlet (not shown) from the secondary chamber 412.

The adjusting cylinder 402 comprises a stroke adjusting element comprising a threaded spacer 426 and a first threaded coupling 428. The threaded spacer 426 may be ring-shaped and may be connected to the cylinder housing 404 by means of the first threaded coupling 428, and the threaded spacer 426 is thus movable in relation to the cylinder housing 404 by means of the first threaded coupling 428. At least a portion 430 of the threaded spacer 426 is positioned between the piston 408 and the cylinder head 406, and at least a portion 431 of the threaded spacer 426 is positioned between the piston rod 415 and the cylinder housing 404. The threaded spacer 426 may hold a guiding ring 432 for guiding the piston rod 415, and thus also for guiding the piston 408, to prevent any radial dislocation of the piston 408. The guiding ring 432 may be made of any suitable polymer material, or any other material. The threaded spacer 426 may also hold an annular scraper 434, e.g. made of a polymeric material, or any other suitable material. The adjusting cylinder 402 may comprise a piston member 436 connected to the piston 408 by being connected to the piston rod 415 by means of a second threaded coupling 438, and the piston member 436 may be axially movable in relation to the piston 408 by means of the second threaded coupling 438. The piston member 436 may be an outer piston member in relation to the adjusting cylinder 402. The piston rod 415 may have a recess for at least partially housing the piston member 436. The piston 408 may bear against the stationary frame 120, e.g. against a stationary part or portion 225 of the frame 120 (see Fig. 2), via the piston member 436.

The axial position of the threaded spacer 426 is adjustable by means of the first threaded coupling 428 to adjust the length of stroke S of the adjusting cylinder 402 and thus to adjust the difference between the two different press nips, *I*, *II* (see Fig. 2). The piston member 436 is axially movable in relation to the piston 408 by means of the second threaded coupling 438 to adjust the axial position of the piston member 436 in relation to the piston 408 for adjusting the first press nip *I* (see Fig. 2). The adjusting cylinder 402 may comprise locking means for locking the piston member 436 to the piston rod 415 and to the piston 408 in order to lock the axial position of the piston member 436 in relation to the piston 408. By means of the locking means, any axial dislocation of the piston member 436 in relation to the piston 408 is avoided. The locking means may comprise a through-hole 440 provided in the piston member 436, a threaded recess 442 provided in the piston 408, and an at least partially threaded locking element 444 adapted to engage the through-hole 440 and the threaded recess 442. However, other locking means are possible. The locking means may also be excluded, as the axial position of the piston member 436 may be held by means of the second threaded coupling 438 per se.

The adjustments of the first and second press nips *I*, *II* are performed according to the following: in order to reduce the second press nip *II*, while maintaining the size of the first press nip *I*, the difference between the two different press nips *I*, *II* is reduced by reducing the length of stroke S of the adjusting cylinder 402 by axially moving the threaded spacer 426 in relation to the cylinder housing 404 in the direction toward the bottom inside wall 421 of the cylinder housing 404.

In order to increase the second press nip *II*, while maintaining the size of the first press nip *I*, the difference between the two different press nips *I*, *II* is increased by increasing the length of stroke S of the adjusting cylinder 402 by axially moving the threaded spacer 426 in relation to the cylinder housing 404 in the direction away from the bottom inside wall 421 of the cylinder housing 404.

In order to reduce the first press nip *I*, the piston member 436 is axially moved in relation to the piston 408 in the direction towards the piston 408. In order to increase the first press nip *I*, the piston member 436 is axially moved in relation to the piston 408 in the direction away the piston 408. When increasing or decreasing the first press nip *I* by a certain value, without any adjustment of the length of stroke S, the the second press nip *II* will be decreased or increased by the same value, as the second press nip *II* is obtained as the sum of the first press nip *I* and the length of stroke S.

If the first press nip *I* shall be adjusted while maintaining the size of the second press nip *II*, the length of stroke S of the adjusting cylinder is adjusted by adjusting the axial position of the threaded spacer 426 in view of the adjustment of the first press nip *I*, to maintain the size of the second press nip *II*, as the second press nip *II* is obtained as the sum of the first press nip *I* and the length of stroke S.

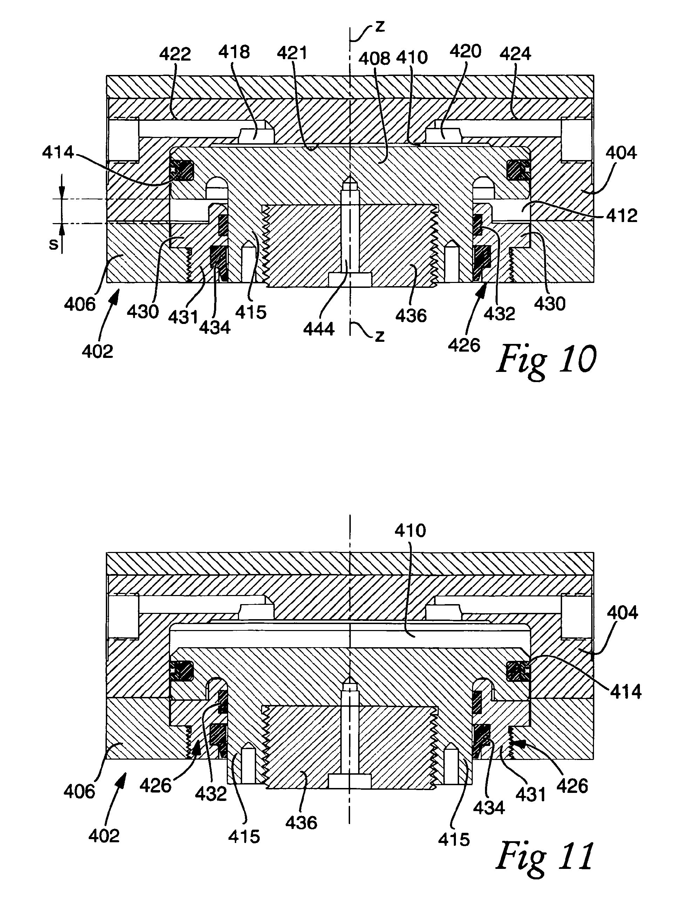

In Fig. 10, the hydraulic medium has been discharged from the primary chamber 410, and the force of the press cylinders 222 has pushed the piston 408 to its axial end position towards the bottom inside wall 421 of the cylinder housing 404, and the first press nip *I* has been attained. In Fig. 11, the primary chamber 410 has been filled with hydraulic medium, and the piston 408 has been pushed against the threaded spacer 426, and the second press nip *II* has been attained. In Figs. 4-6 and Figs. 9-10, the largest possible length of stroke S is set for the embodiment shown, and the smallest possible first press nip *I* is set for the embodiment shown.

By means of the second embodiment of the device according to the present invention, the two press nips *I*, *II* may be adjusted and set without dismantling any part of the apparatus during operation, and without dismantling the adjusting cylinder, and any substantial standstill in the processing of pulp is avoided.

The cylinder housing and its cylinder head, the piston, the spacer, the piston member, the means of attachment may be made of different materials, e.g. any suitable metal. The material of the one of some parts of the hydraulic cylinder may differ from other parts of the hydraulic cylinder.

The invention shall not be considered limited to the embodiments illustrated, but can be modified and altered in many ways by one skilled in the art, without departing from the scope of the appended claims.

## Claims

1. A device for adjusting a press nip (126) defined by a first press roll (102) and a second press roll (104), each press roll being rotatable about an axis of rotation (103, 105) and arranged in an apparatus for dewatering pulp, and the apparatus has a first pair of bearing housings (220) provided with bearings (218) by means of which the first press roll is journalled, each bearing housing of the first pair and the first press roll being movable in relation to the second press roll in a direction substantially transverse to the axial direction of the press nip, the device comprising pressure means (222) for forcing the bearing housings of the first pair in a direction towards the press nip, the first press roll being movable between a first radial end position and a second radial end position, and the device is arranged to adjust the press nip during operation of the apparatus and comprises at least one adjusting cylinder (223; 402) for adjusting the first press roll to each of the radial end positions during operation of the apparatus, the adjusting cylinder being arranged to force at least one of the bearing housings of the first pair in a direction away from the press nip to move the first press roll to one of the radial end positions, **characterized in that** the adjusting cylinder has a length of stroke (S) that defines the difference between two different press nips (*I*, II) for the apparatus, wherein the length of stroke (S) of the adjusting cylinder (223; 402) is adjustable to adjust the difference between the two different press nips (*I*, *II*).

2. A device according to claim 1, **characterized in that** the adjusting cylinder (223; 402) is arranged to at least partially counteract the force produced by the pressure means (222) and applied to at least one of the bearing housings (220) of the first pair.

3. A device according to claim 1 or 2, **characterized in that** the adjusting cylinder (223; 402) comprises a cylinder housing (234; 404), the cylinder housing defining an axis *(x-x; z-z)* and being provided with a cylinder head (229; 406), and a piston (224; 408) housed in the cylinder housing and axially movable in relation to the cylinder housing.

4. A device according to claim 3, **characterized in that** the pressure means comprise at least one pressure cylinder (222).

5. A device according to claim 4, **characterized in that** the adjusting cylinder (223; 402) is arranged to be connected to a pressure source (244) to which the at least one pressure cylinder is connected, **in that** the adjusting cylinder has a piston area (a) which is greater than the piston area (b) of the pressure cylinder (222), a first press nip (*I*) of the two press nips being smaller than a second press nip (*II*) of the two press nips, **in that** the adjusting cylinder is arranged to set the second press nip when the adjusting cylinder and the pressure cylinder are exposed to the same pressure from the pressure source, and **in that** the adjusting cylinder is arranged to set the first press nip when the adjusting cylinder is disconnected from the pressure source.

6. A device according to any of the claims 3 to 5, **characterized in that** the adjusting cylinder (402) comprises a threaded coupling (428) and a stroke adjusting element, and **in that** the axial position of the stroke adjusting element is adjustable by means of the threaded coupling to adjust the length of stroke (S) of the adjusting cylinder and thus to adjust the difference between the two different press nips (*I*, II).

7. A device according to claim 6, **characterized in that** the stroke adjusting element comprises a spacer (426), at least a portion (430) of the spacer being positioned between the piston (408) and the cylinder head (406) to adjust the length of stroke (S) by means of the spacer, and **in that** the spacer is movable by means of the threaded coupling for adjusting the axial position of the spacer to adjust the length of stroke.

8. A device according to claim 7, **characterized in that** the spacer (426) is connected to the cylinder housing (404) by means of the threaded coupling (428), and **in that** the spacer is movable in relation to the cylinder housing by means of the threaded coupling.

9. A device according to claim 7 or 8, **characterized in that** the adjusting cylinder (402) comprises an axially extending piston rod (415) connected to the piston (408), and **in that** at least a portion (431) of the spacer (426) is positioned between the piston rod and the cylinder housing (404).

10. A device according to any of the claims 3 to 5, **characterized in that** the cylinder housing (234) is arranged to hold at least one removable spacer (232) between the piston (224) and the cylinder head (229) to adjust the length of stroke (S) of the adjusting cylinder (223) by means of the spacer, and **in that** the device is arranged to adjust the difference between the two different press nips (*I*, *II*) by means of the spacer.

11. A device according to any of the claims 3 to 10, **characterized in that** the adjusting cylinder comprises a piston member (230; 436) connected to the piston (224; 408) by means of a second threaded coupling (231; 438), a first press nip (*I*) of the two press nips being smaller than a second press nip (II) of the two press nips, and **in that** the piston member is axially movable in relation to the piston by means of the second threaded coupling to adjust the axial position of the piston member in relation to the piston for adjusting the first press nip.

12. A device according to claim 11, **characterized in that** the adjusting cylinder (402) comprises locking means for locking the piston member (436) to the piston (408) to lock the axial position of the piston member in relation to the piston.

13. A device according to claim 11, **characterized in that** the piston (224) or/and the piston member (230) is/are arranged to hold a removable second spacer (233) between the piston and the piston member to adjust and/or fix the first press nip (*I*).

14. An apparatus for dewatering cellulose-containing pulp, comprising a first press roll (102) and a second press roll (104), each press roll being rotatable about an axis of rotation (103, 105) and having a permeable outer surface (106, 108), the press rolls defining a press nip (126) between them, and the apparatus is arranged to feed the pulp in the direction of rotation (R₁, R₂) of the press rolls through the press nip, in which press nip the pulp is pressed, the apparatus comprises a first pair of bearing housings (220) provided with bearings (218) by means of which the first press roll is journalled, each bearing housing of the first pair and the first press roll being movable in relation to the second press roll in a direction substantially transverse to the axial direction of the press nip, and pressure means (222) for forcing the bearing housings of the first pair in a direction towards the press nip, **characterized in that** the apparatus comprises a device for adjusting the press nip as defined in any of the claims 1 to 13.

## Patentansprüche

1. Vorrichtung zum Einstellen eines Pressspaltes (126), der durch eine erste Pressrolle (102) und eine zweite Pressrolle (104) definiert wird, wobei jede Pressrolle um eine Drehachse (103, 105) drehbar ist und in einem Apparat zum Entwässern von Pülpe angeordnet ist, wobei der Apparat ein erstes Paar von Lagergehäusen (220) aufweist, die mit Lagern (218) versehen sind, in denen die erste Pressrolle gelagert ist, jedes Lagergehäuse des ersten Paares und die erste Pressrolle sind bezüglich der zweiten Pressrolle in einer Richtung beweglich, die im Wesentlichen quer zur axialen Richtung des Pressspaltes liegt, wobei die Vorrichtung Druckmittel (222) aufweist, um die Lagergehäuse des ersten Paares in eine Richtung zum Pressspalt hin zu drücken und die erste Pressrolle zwischen einer ersten radialen Endposition und einer zweiten radialen Endposition beweglich ist, und die Vorrichtung so ausgebildet ist, dass sie den Pressspalt während des Betriebs des Apparates adjustieren kann und zumindest einen Justierzylinder (223; 402) aufweist, um die erste Pressrolle in jede der radialen Endpositionen während des Betriebs des Apparates zu bringen, wobei der Justierzylinder so angeordnet ist, dass er zumindest eines der Lagergehäuse des ersten Paares in eine Richtung fort vom Pressschlitz belastet, um die erste Pressrolle in eine der radialen Endpositionen zu bewegen, **dadurch gekennzeichnet, dass** der Justierzylinder einen Arbeitshub (*S*) aufweist, der die Differenz zwischen den beiden Pressschlitzen *(I, II*) für den Apparat definiert, wobei die Länge des Arbeitshubes (*S*) des Justierzylinders (223; 402) justierbar ist, um den Abstand zwischen den beiden Pressschlitzen *(I, II*) zu justieren.

2. Vorrichtung nach Anspruch 1 **dadurch gekennzeichnet, dass** der Justierzylinder (223; 402) so angeordnet ist, dass er der durch die Druckmittel (222) geschaffenen Kraft zumindest teilweise entgegenwirkt und zumindest auf eines der Lagergehäuse (220) des ersten Paares wirkt.

3. Vorrichtung nach Anspruch 1 oder 2 **dadurch gekennzeichnet, dass** der Justierzylinder (223; 402) ein Zylindergehäuse (234; 404) umfasst, wobei das Zylindergehäuse eine Achse *(x-x; z-z)* definiert und mit einem Zylinderkopf (229; 406) versehen ist, und einen Kolben (224; 408) der im Zylindergehäuse angeordnet ist und axial bezüglich des Zylindergehäuses beweglich ist.

4. Vorrichtung nach Anspruch 3, **dadurch gekennzeichnet, dass** das Druckmittel zumindest einen Druckzylinder (222) umfasst.

5. Vorrichtung nach Anspruch 4, **dadurch gekennzeichnet, dass** der Justierzylinder (223; 402) so ausgebildet ist, dass er mit einer Druckquelle (244) verbindbar ist, an die der zumindest eine Druckzylinder angeschlossen ist, dadurch, dass der Justierzylinder eine Kolbenfläche *(a)* aufweist, die größer ist als die Kolbenfläche *(b)* des Druckzylinders (222), dass der erste Pressspalt (*I*) der beiden Pressspalte kleiner ist als ein zweiter Pressspalt (*II*) der beiden Pressspalte, dass der Justierzylinder dazu ausgebildet ist, den zweiten Pressspalt zu bilden, wenn der Justierzylinder und der Druckzylinder dem gleichen Druck von der Druckquelle her ausgesetzt sind, und dass der Justierzylinder so ausgebildet ist, dass er den ersten Schlitz bildet, wenn der Justierzylinder von der Druckquelle getrennt wird.

6. Vorrichtung nach einem der Ansprüche 3 bis 5, **dadurch gekennzeichnet, dass** der Justierzylinder (402) eine mit einem Gewinde versehene Kupplung (428) und ein Hubjustierelement umfasst, und dadurch, dass die axiale Position des Hubjustierelementes durch die mit einem Gewinde versehene Kupplung justierbar ist, um die Länge des Hubes (*S*) des Justierzylinders einzustellen und so die Differenz zwischen den zwei unterschiedlichen Pressschlitzen (*I, II*) zu justieren.

7. Vorrichtung nach Anspruch 6, **dadurch gekennzeichnet, dass** das Hubjustierelement einen Abstandhalter (426) umfasst, wobei zumindest ein Teil (430) des Abstandhalters zwischen dem Kolben (408) und dem Zylinderkopf (406) positioniert ist, um die Länge des Hubes (*S*) mittels des Abstandhalters einzustellen, und dadurch, dass der Abstandhalter durch die mit einem Gewinde versehene Kupplung beweglich ist, um die axiale Position des Abstandhalters verstellen zu können, um so die Länge des Hubes einstellen zu können.

8. Vorrichtung nach Anspruch 7, **dadurch gekennzeichnet, dass** der Abstandhalter (426) mit dem Zylindergehäuse (404) mittels der mit einem Gewinde versehenen Kupplung (428) verbunden ist, und dadurch, dass der Abstandhalter bezüglich des Zylindergehäuses mit Hilfe der mit einem Gewinde versehenen Kupplung beweglich ist.

9. Vorrichtung nach Anspruch 7 oder 8, **dadurch gekennzeichnet, dass** der Justierzylinder (402) eine axial sich erstreckende Kolbenstange (415) umfasst, die mit dem Kolben (408) verbunden ist, und dadurch, dass zumindest ein Teil (431) des Abstandhalters (426) zwischen der Kolbenstange und dem Zylindergehäuse (404) angeordnet ist.

10. Vorrichtung nach einem der Ansprüche 3 bis 5, **dadurch gekennzeichnet, dass** das Zylindergehäuse (234) so ausgebildet ist, dass es zumindest einen entfernbaren Abstandhalter (232) zwischen dem Kolben (224) und dem Zylinderkopf (229) hält, um die Länge des Hubes (*S*) des Justierzylinders (223) mittel des Abstandhalters einzustellen, und dadurch, dass die Vorrichtung so ausgebildet ist, dass sie den Abstand zwischen den beiden unterschiedlichen Pressspalten (*I, II*) mit Hilfe des Abstandhalters justiert.

11. Vorrichtung nach einem der Ansprüche 3 bis 10, **dadurch gekennzeichnet, dass** der Justierzylinder einen Kolbenteil (230; 436) umfasst, der mit dem Kolben (224; 408) mit Hilfe einer zweiten mit einem Gewinde versehenen Kupplung (231; 438) verbunden ist, ein erster Pressspalt (*I*) der beiden Pressspalten ist kleiner als der zweite Pressspalt (*II*) der beiden Pressspalten, und dadurch, dass der Kolbenteil bezüglich des Kolbens mittels der zweiten mit einem Gewinde versehenen Kupplung axial beweglich ist, um so die axiale Position des Kolbenteils bezüglich des Kolbens einzustellen, um so den ersten Pressspalt einzustellen.

12. Vorrichtung nach Anspruch 11, **dadurch gekennzeichnet, dass** der Justierzylinder (402) Fixiermittel umfasst, um den Kolbenteil (436) am Kolben (408) zu fixieren, um so die axiale Position des Kolbenteils bezüglich des Kolbens zu fixieren.

13. Vorrichtung nach Anspruch 11 **dadurch gekennzeichnet, dass** der Kolben (224) und/oder der Kolbenteil (230) so angeordnet ist (sind), dass sie einen entfernbaren zweiten Abstandhalter (233) zwischen dem Kolben und dem Kolbenteil halten, um den ersten Pressschlitz (*I*) zu justieren und/oder zu fixieren.

14. Apparat zum Entwässern von cellulosehältiger Pülpe, umfassend eine erste Pressrolle (102) und eine zweite Pressrolle (104), jede Pressrolle ist um eine Drehachse (103; 105) drehbar gelagert und weist eine durchlässige äußere Oberfläche (106; 108) auf, die Pressrollen definieren zwischen sich einen Pressspalt (126) und der Apparat ist so angeordnet, dass er Pülpe in Drehrichtung (R₁, R₂) der Pressrollen durch den Pressspalt fördert, in diesem Pressspalt wird die Pülpe gepresst, wobei der Apparat ein erstes Paar von Lagergehäusen (220) aufweist, die mit Lagern (218) versehen sind, mittels derer die erste Pressrolle gelagert ist, wobei jedes Lagergehäuse des ersten Paares und die erste Pressrolle bezüglich der zweiten Pressrolle in einer Richtung beweglich ist, die im Wesentlichen quer zur axialen Richtung des Pressspaltes verläuft, und wobei Pressmittel (222) vorgesehen sind, um die Lagergehäuse des ersten Paares in eine Richtung zum Pressschlitz hin zu drücken, **dadurch gekennzeichnet, dass** der Apparat eine Vorrichtung zur Justierung des Pressschlitzes, wie in einem der Ansprüche 1 - 13 definiert, aufweist.

## Revendications

1. Dispositif pour ajuster une ligne de pressage (126) définie par un premier rouleau de pressage (102) et un deuxième rouleau de pressage (104), chaque rouleau de pressage pouvant tourner autour d'un axe de rotation (103, 105) et étant agencés dans un appareil destiné à déshydrater la pâte à papier, et l'appareil présente une première paire de logements de palier (220) dotés de paliers (218) au moyen desquels le premier rouleau de pressage est tourillonné, chaque logement de palier de la première paire et le premier rouleau de pressage pouvant se déplacer par rapport au deuxième rouleau de pressage dans une direction essentiellement transversale à la direction axiale de la ligne de pressage, le dispositif comprenant des moyens de pression (222) pour forcer les logements de palier de la première paire dans une direction vers la ligne de pressage, le premier rouleau de pressage pouvant être déplacé entre une première position d'extrémité radiale et une deuxième position d'extrémité radiale, et le dispositif est conçu pour ajuster la ligne de pressage pendant le fonctionnement de l'appareil et comprend au moins un cylindre d'ajustement (223 ; 402) pour ajuster le premier rouleau de pressage dans chacune des positions d'extrémité radiale pendant le fonctionnement de l'appareil, le cylindre d'ajustement étant agencé de manière à forcer au moins l'un des logements de palier de la première paire dans une direction s'éloignant de la ligne de pressage pour déplacer le premier rouleau de pressage vers l'une des positions d'extrémité radiales, **caractérisé en ce que** le cylindre d'ajustement présente une longueur de course (S) qui définit la différence entre deux lignes de pressage différentes (I, II) pour l'appareil, dans lequel la longueur de la course (S) du cylindre d'ajustement (223 ; 402) peut être réglée de manière à ajuster la différence entre les deux lignes de pressage différentes (I, II).

2. Dispositif selon la revendication 1, **caractérisé en ce que** le cylindre d'ajustement (223 ; 402) est agencé en vue de contrecarrer au moins partiellement la force produite par les moyens de pression (222) et appliquée à au moins l'un des logements de palier (220) de la première paire.

3. Dispositif selon la revendication 1 ou 2, **caractérisé en ce que** le cylindre d'ajustement (223 ; 402) comprend un logement de cylindre (234 ; 404), le logement de cylindre définissant un axe (x-x ; z-z) et étant doté d'une tête de cylindre (229 ; 406), et d'un piston (224 ; 408) logé dans le logement de cylindre et pouvant se déplacer axialement par rapport au logement de cylindre.

4. Dispositif selon la revendication 3, **caractérisé en ce que** les moyens de pression comprennent au moins un cylindre de pression (222).

5. Dispositif selon la revendication 4, **caractérisé en ce que** le cylindre d'ajustement (223 ; 402) est agencé pour être raccordée à une source de pression (244) à laquelle l'au moins un cylindre de pression est raccordé, **en ce que** le cylindre d'ajustement présente une surface de piston (a) qui est plus grande que la surface de piston (b) du cylindre de pression (222), une première ligne de pressage (I) des deux lignes de pressage étant plus petite qu'une deuxième ligne de pressage (II) des deux lignes de pressage, **en ce que** le cylindre d'ajustement est agencé pour établir la deuxième ligne de pressage lorsque le cylindre d'ajustement et le cylindre de pression sont exposés à la même pression provenant de la source de pression, et **en ce que** le cylindre d'ajustement est agencé en vue d'établir la première ligne de pressage lorsque le cylindre d'ajustement est déconnecté de la source de pression.

6. Dispositif selon l'une quelconque des revendications 3 à 5, **caractérisé en ce que** le cylindre d'ajustement (402) comporte un couplage par filetage (428) et un élément d'ajustement de course, et **en ce que** la position axiale de l'élément d'ajustement de la course peut être ajustée au moyen du couplage par filetage pour régler la longueur de la course (S) du cylindre d'ajustement et ainsi ajuster la différence entre les deux lignes de pressage différentes (I, II).

7. Dispositif selon la revendication 6, **caractérisé en ce que** l'élément d'ajustement de la course comprend une pièce d'écartement (426), au moins une partie (430) de la pièce d'écartement étant positionnée entre le piston (408) et la tête de cylindre (406) pour ajuster la longueur de la course (S) au moyen de la pièce d'écartement, et **en ce que** la pièce d'écartement peut être déplacée par l'intermédiaire du couplage par filetage en vue d'ajuster la position axiale de l'écarteur pour ajuster la longueur de la course.

8. Dispositif selon la revendication 7, **caractérisé en ce que** la pièce d'écartement (426) est raccordée au logement de cylindre (404) au moyen du couplage par filetage (428), et **en ce que** la pièce d'écartement peut être déplacée par rapport au logement de cylindre au moyen du couplage par filetage.

9. Dispositif selon la revendication 7 ou 8, **caractérisé en ce que** le cylindre d'ajustement (402) comporte une tige de piston s'étendant axialement (415) raccordée au piston (408), et **en ce qu'**au moins une partie (431) de la pièce d'écartement (426) est positionnée entre la tige de piston et le logement de cylindre (404).

10. Dispositif selon l'une quelconque des revendications 3 à 5, **caractérisé en ce que** le logement de cylindre (234) est conçu de façon à maintenir au moins une pièce d'écartement amovible (232) entre le piston (224) et la tête de cylindre (229) pour ajuster la longueur de la course (S) du cylindre d'ajustement (223) au moyen de la pièce d'écartement, et **en ce que** le dispositif est conçu pour ajuster la différence entre les deux lignes de pressage différentes (I, II) au moyen de la pièce d'écartement.

11. Dispositif selon l'une quelconque des revendications 3 à 10, **caractérisé en ce que** le cylindre d'ajustement comprend un élément de piston (230 ; 436) raccordé au piston (224 ; 408) au moyen d'un deuxième couplage par filetage (231 ; 438), une première ligne de pressage (I) des deux lignes de pressage étant plus petite qu'une deuxième ligne de pressage (II) des deux lignes de pressage, et **en ce que** l'élément de piston peut se déplacer axialement par rapport au piston au moyen du deuxième couplage par filetage afin d'ajuster la position axiale de l'élément de piston par rapport au piston en vue d'ajuster la première ligne de pressage.

12. Dispositif selon la revendication 11, **caractérisé en ce que** le cylindre d'ajustement (402) comporte des moyens de verrouillage pour verrouiller l'élément de piston (436) sur le piston (408) afin de verrouiller la position axiale de l'élément de piston par rapport au piston.

13. Dispositif selon la revendication 11, **caractérisé en ce que** le piston (224) et/ou l'élément de piston (230) est/sont agencé(s) pour maintenir une deuxième pièce d'écartement amovible (233) entre le piston et l'élément de piston pour ajuster et/ou fixer la première ligne de pressage (I).

14. Appareil permettant de déshydrater de la pâte à papier contenant de la cellulose, comportant un premier rouleau de pressage (102) et un deuxième rouleau de pressage (104), chaque rouleau de pressage pouvant tourner autour d'un axe de rotation (103, 105) et présentant une surface extérieure perméable (106, 108), les rouleaux de pressage définissant entre eux une ligne de pressage (126), et l'appareil est agencé de façon à fournir la pâte à papier dans la direction de rotation (R₁, R₂) des rouleaux de pressage à travers la ligne de pressage, ligne de pressage dans laquelle la pâte à papier est pressée, l'appareil comportant une première paire de logements de palier (220) dotés de paliers (218) au moyen desquels le premier rouleau de pressage est tourillonné, chaque logement de palier de la première paire et le premier rouleau de pressage pouvant être déplacés par rapport au deuxième rouleau de pressage dans une direction essentiellement transversale à la direction axiale de la ligne de pressage, et des moyens de pression (222) pour forcer les logements de palier de la première paire dans une direction vers la ligne de pressage, **caractérisé en ce que** l'appareil comporte un dispositif permettant d'ajuster la ligne de pressage tel que cela est défini dans l'une quelconque des revendications 1 à 13.
